# EUROPÄISCHE PATENTSCHRIFT

(11) **EP 3 587 815 B1**
(45) Veröffentlichungstag und Bekanntmachung des Hinweises auf die Patenterteilung: **02.03.2022**
(21) Anmeldenummer: 18180487.3
(22) Anmeldetag: 28.06.2018
(51) Int. Cl.: F04B 37/14, F04C 25/02, F04D 19/00, F04D 19/04, F04D 29/52, F04D 29/64, F04D 29/02, F16B 21/06

(54) **VAKUUMGERÄT**
VACUUM DEVICE
APPAREIL À VIDE

(43) Veröffentlichungstag der Anmeldung: 01.01.2020
(73) Patentinhaber: PFEIFFER VACUUM GMBH, 35614 Asslar (DE)
(72) Erfinder: Oberbeck, Sebastian, 35781 Weilburg (DE)
(74) Vertreter: Manitz Finsterwald Patent- und Rechtsanwaltspartnerschaft mbB

(56) Entgegenhaltungen:
- CN-A- 107 654 375
- CN-U- 205 225 618
- CN-Y- 2 588 074
- DE-A1-102014 101 916
- US-A- 3 812 659
- US-A1- 2014 119 905
- US-A1- 2015 282 384
- US-A2- 2004 264 154
- US-B1- 6 341 644
- Noctua: "NA-SAV4 Anti-Vibration Mounts", , 7 December 2017 (2017-12-07), pages 1-3, XP055774514, Retrieved from the Internet: URL:https://web.archive.org/web/2017120715 2910/http://noctua.at/en/na-sav4 [retrieved on 2021-02-10]

## Beschreibung

Die vorliegende Erfindung betrifft ein Vakuumgerät, insbesondere Vakuumpumpe, mit einem ersten Bauteil, einem zweiten Bauteil und einer Einrichtung zum Verbinden des ersten und des zweiten Bauteils.

Derartige Verbindungseinrichtungen können beispielsweise bei einer Fertigung des Vakuumgeräts eingesetzt werden, um mehrere Bauteile, Baukomponenten oder Baugruppen zu verbinden und zu einer baulichen Einheit zusammenzuführen. Auch kann es notwendig sein, im Rahmen einer Wartung oder einer Reparatur einzelne Bauteile, Baukomponenten oder Baugruppen nach einer gewissen Betriebszeit des Vakuumgeräts zu überprüfen oder auszutauschen, was ein Lösen und ein erneutes Herstellen der Verbindung zwischen den Baukomponenten oder Baugruppen erfordert.

Herkömmliche Verbindungseinrichtungen basieren dabei auf bekannten Verbindungstechniken wie beispielsweise Löten, Schweißen, Schrauben, Nieten, Clinchen, Einpressen, Bördeln oder Umformen, wobei nur wenige dieser Verbindungsarten ein zerstörungsfreies Lösen der Verbindung erlauben. Ein weiteres gemeinsames Problem bekannter Einrichtungen besteht in der Notwendigkeit, ein gesondertes Werkzeug zur Hand zu haben, um die Verbindung herstellen zu können. Zum anderen zeichnen sich die bekannten Einrichtungen durch einen, im Einzelnen zwar durchaus unterschiedlichen, jedoch immer relevanten arbeitstechnischen Aufwand auf, um die Verbindung der Bauteile, Baukomponenten oder Baugruppen herzustellen, was die Kosten der Fertigung, Wartung oder Reparatur erhöht.

Ein Vakuumgerät gemäß dem Oberbegriff des Anspruchs 1 ist aus US 2004/264154 A2 bekannt. Weitere Vakuumgeräte sind aus US 3 812 659 A und

DE 10 2014 101916 A1 bekannt. Das Dokument "Noctua: NA-SAV4 Anti-Vibration Mounts" beschreibt eine Einrichtung zum Verbinden eines ersten und eines zweiten Bauteils.

Es ist Aufgabe der Erfindung, ein Vakuumgerät mit einer Einrichtung zu schaffen, mittels derer ein erstes Bauteil und ein zweites Bauteil schnell, einfach, sicher und kostengünstig miteinander verbunden werden können.

Die Aufgabe wird durch ein Vakuumgerät gemäß Anspruch 1 gelöst, und insbesondere dadurch, dass die Einrichtung zumindest ein am ersten Bauteil ausgebildetes Steckelement und wenigstens eine am zweiten Bauteil ausgebildete Aufnahme mit einer Aufnahmeöffnung für das Steckelement umfasst, wobei das Steckelement und die Aufnahme derart ausgebildet sind, dass durch Einstecken des Steckelements in die Aufnahme eine Klemmverbindung zwischen den beiden Bauteilen herstellbar ist.

Das heißt, dass alleine durch das Zusammenführen von Steckelement und Aufnahme eine Verbindung zwischen dem ersten Bauteil und dem zweiten Bauteil gebildet wird, die klemmend wirkt und die beiden Bauteile sicher und dauerhaft miteinander verbindet.

Durch diese klemmende Steckverbindung lässt sich der arbeitstechnische und zeitliche Aufwand erheblich reduzieren, was zu einer dementsprechenden Abnahme der Kosten für die Fertigung, Wartung oder Reparatur des Vakuumgeräts führt.

Die Verbindung der Bauteile ist dauerhaft, das heißt, das erste und das zweite Bauteil sind fest, stabil und sicher miteinander verbunden. Die Verbindung mittels der erfindungsgemäßen Einrichtung hat dabei insbesondere auch dann Bestand, wenn die Bauteile Positionsänderungen, Vibrationen oder Erschütterungen ausgesetzt sind, beispielsweise während eines Transports oder eines Betriebs des Vakuumgeräts.

Bevorzugte Ausführungsformen der Erfindung sind den abhängigen Ansprüchen zu entnehmen.

Erfindungsgemäß ist eines der Bauteile ein Gehäuseteil oder eine abnehmbare Abdeckung des Vakuumgeräts. Bei dem Vakuumgerät kann es sich beispielsweise um eine Vakuumpumpe handeln, insbesondere um eine Drehschieberpumpe oder um eine Scrollpumpe. Denkbar ist auch, dass das Vakuumgerät ein Bestandteil eines Lecksuchgerätes oder eines Massenspektrometers ist. Dabei können sowohl die Steckelemente als auch die Aufnahmen kostengünstig und in einfacher Weise hergestellt werden. So kann das Steckelement beispielsweise schon bei der Fertigung des Gehäuseteils an diesem angebracht oder ausgebildet werden. Denkbar ist insbesondere eine einstückige Ausbildung von Gehäuseteil und Steckelement, wodurch sich das Steckelement schnell und einfach herstellen und ohne einen gesonderten Fertigungsschritt an dem Gehäuseteil anbringen lässt. Gleichermaßen lassen sich auch die Aufnahmen bereits bei der Fertigung des Gehäuseteils ausbilden. Möglich ist jedoch auch eine nachträgliche Ausbildung der Aufnahmen in einem bereits gefertigten Gehäuseteil, beispielsweise durch Bohren oder Fräsen.

Erfindungsgemäß ist eines der Bauteile ein elektrisches Bauteil, insbesondere ein Lüfter. Die elektrischen Bauteile können insbesondere vorgefertigt sein und im Vakuumgerät unterschiedliche Funktionen erfüllen, wobei sie bei der Fertigung in das Vakuumgerät eingesetzt und mit anderen Bauteilen des Vakuumgeräts, beispielsweise dem Gehäuseteil, verbunden werden. Lüfter werden beispielweise eingesetzt, um das Vakuumgerät konvektiv zu kühlen, und können, entsprechend einer erforderlichen Kühlleistung unterschiedliche Dimensionen aufweisen. Dies macht eine Verbindungseinrichtung erforderlich, die flexibel an die Dimensionen der Bauteile, insbesondere der elektrischen Bauteile, anpassbar ist.

Das elektrische Bauteil kann ein erstes Bauteil sein und ein Steckelement aufweisen. Vorteilhafterweise ist das elektrische Bauteil jedoch als zweites Bauteil ausgebildet, d.h. das elektrische Bauteil weist eine Aufnahme auf. Die Aufnahme kann beispielsweise als Bohrung ausgebildet sein und bereits bei der Fertigung des elektrischen Bauteils gebildet werden. Hierdurch kann das elektrische Bauteil ohne einen weiteren vorbereitenden Fertigungsschnitt in das Vakuumgerät eingesetzt und durch die Verbindungseinrichtung mit diesem verbunden werden. Möglich ist jedoch auch eine nachträgliche Ausbildung der Aufnahme, wobei die Aufnahme durch Bohrung gebildet werden kann. Die nachträgliche Bildung besagter Aufnahme kann mit geringem Arbeitsaufwand durchgeführt werden und kann derart gestaltet werden, dass Aufnahmen in einer großen Stückzahl von elektrischen Bauteilen schnell und einfach gebildet werden können.

Gemäß einer nicht beanspruchten Ausführungsform sind das erste und das zweite Bauteil Gehäuseteile eines Vakuumgeräts. Denkbar ist beispielsweise, die Abdeckung des Vakuumgeräts und einen Hauptkörper des Vakuumgeräts mittels der erfindungsgemäßen Klemmverbindung stabil zu verbinden.

Erfindungsgemäß ist das Steckelement zylindrisch oder konisch ausgebildet. Derartige Steckelemente können einfach und kostengünstig hergestellt und an dem zweiten Bauteil angebracht oder als Teile des zweiten Bauteils gebildet werden. Die zylindrische oder konische Ausbildung verleiht der Verbindung eine besonders hohe Stabilität und Sicherheit.

Erfindungsgemäß ist die Aufnahmeöffnung zylindrisch oder ringförmig oder konisch ausgebildet. Die Ausbildung der Aufnahmeöffnung unterscheidet sich von der Ausbildung des Steckelements, wobei die Verbindung nur über einen Teil einer Oberfläche des Steckelements und/oder einen Teil einer Innenfläche der Aufnahme hergestellt wird.

Dabei versteht es sich, dass ein Querschnittsdurchmesser der Aufnahme und ein Querschnittsdurchmesser des Steckelements aufeinander abgestimmt sind und insbesondere nicht stark voneinander abweichen. Ist beispielsweise der minimale Querschnittsdurchmesser der Aufnahme größer als der maximale Querschnittsdurchmesser des Steckelements, so können die Bauteile keine Klemmverbindung eingehen. Das gleiche gilt für ein zylinderförmiges Steckelement mit einem Querschnittsdurchmesser, der größer ist als der maximale Querschnittsdurchmesser der Aufnahme. Bei einem konischen Steckelement führt dagegen ein relativ zum maximalen Querschnittsdurchmesser der Aufnahme vergrößerter Querschnittsdurchmesser der Basis dazu, dass das Steckelement nicht vollständig bis zur Basis in die Aufnahme eingeführt werden kann. Je nach konkreter Ausgestaltung von Aufnahme und Steckelement kann dies vorteilhaft oder von Nachteil sein.

In einer vorteilhaften Ausführungsform ist das Steckelement konisch und die Aufnahmeöffnung zylindrisch oder ringförmig ausgebildet. Anders ausgedrückt steht nur ein Teil einer Oberfläche des Steckelements mit der Aufnahme in Kontakt, wobei die Klemmverbindung auf einen Bereich nahe der Basis des Steckelements begrenzt sein kann. Dies bedeutet, dass die Aufnahme nur über einen gewissen Bereich ihrer Innenfläche an das Steckelement angepasst sein kann.

Die Ausbildung der Aufnahmen kann somit mit vergleichsweise großer Flexibilität bezüglich ihrer spezifischen Ausgestaltung erfolgen. Anders ausgedrückt müssen die Steckelemente nicht exakt an die, insbesondere vorgefertigten, Aufnahmen angepasst sein. Vielmehr genügt es, wenn das Steckelement über einen gewissen Bereich einen Umfang aufweist, um in diesem Bereich eine klemmende Verbindung mit der Aufnahme eingehen zu können. Somit können identisch ausgebildete Steckelemente verwendet werden, um beispielsweise elektrische Geräte verschiedener Hersteller und/oder elektrische Geräte mit unterschiedlichen Querschnittsdurchmessern der Aufnahmen im oder am Vakuumgerät zu befestigen. Dadurch lassen sich die Kosten für die Herstellung der Steckelemente reduzieren.

Eine Kombination aus konischem Steckelement und zylindrischer Aufnahme ist besonders vorteilhaft angesichts des Umstands, dass häufig der Hersteller von Vakuumgeräten keinen oder allenfalls unter erhöhten Einkaufskosten Einfluss auf die Ausgestaltung von als Zukaufteile vorgesehenen Komponenten der Vakuumgeräte hat. Weit verbreitete zylindrische Bohrungen in Komponenten beispielsweise, die vom Komponentenhersteller überhaupt nicht als Aufnahmen für konische Steckelemente, sondern z.B. für Befestigungsschrauben gedacht sind, lassen sich gleichwohl in erfindungsgemäßer Weise vom Vakuumgerätehersteller nutzen, der die Ausgestaltung "seiner" Vakuumgeräte in der Hand hat und folglich zu den zylindrischen Bohrungen in den Komponenten passende konische Steckelemente an den von ihm gefertigten Bauteilen der Vakuumgeräte vorsehen kann.

Zur weiteren Reduktion der Herstellungskosten ist das Steckelement und/oder die Aufnahme vorteilhafterweise einstückig mit dem jeweiligen Bauteil ausgebildet. Das heißt, dass das Bauteil und das Steckelement bzw. die Aufnahme in einem Fertigungsschritt gefertigt werden können. Besonders einfach lässt sich hierbei die Ausbildung des Steckelements oder der Aufnahme bei Bauteilen gestalten, die aus Kunststoff, beispielsweise im Spritzgussverfahren, hergestellt werden.

Gemäß einer Ausführungsform ist das Steckelement länglich ausgebildet, insbesondere wobei Länge und maximaler Durchmesser des Steckelements ein Verhältnis von wenigstens 3 zu 1, bevorzugt wenigstens 4 zu 1 und besonders bevorzugt wenigstens 5 zu 1 aufweisen. Die längliche Ausbildung des Steckelements bewirkt eine Führung der Aufnahme bei einer Herstellung der Verbindung zwischen erstem und zweitem Bauteil und erleichtert somit ein Einführen des Steckelements in die Aufnahme.

Vorteilhafterweise ist die Klemmverbindung zerstörungsfrei lösbar ausgebildet. Dadurch wird ermöglicht, die Klemmverbindung zwischen den Bauteilen zu lösen, um beispielsweise das Vakuumgerät oder Teile davon einer Wartung zu unterziehen. Nach erfolgter Wartung können die Bauteile mittels derselben Klemmverbindung wieder verbunden werden. Die Ausbildung einer weiteren Einrichtung, um die Bauteile wieder zu verbinden, ist somit nicht notwendig. Dies erleichtert die Wartung oder auch Reparatur des Vakuumgeräts, vermindert den dafür notwendigen Arbeitsaufwand und gestaltet die Wartung oder Reparatur damit insgesamt kostengünstiger.

Bevorzugt ist die Klemmverbindung werkzeuglos herstellbar und/oder werkzeuglos lösbar ausgebildet. Somit kann die Klemmverbindung einfach und schnell hergestellt und wieder gelöst werden, wobei dafür z.B. ein manuelles Zusammendrücken bzw. Auseinanderziehen ausreicht. Dabei kann die Klemmverbindung werkzeuglos gelöst und werkzeuglos wiederhergestellt werden, ohne die Sicherheit und Stabilität der Klemmverbindung zu vermindern.

Vorteilhafterweise ist die Klemmverbindung wiederholt herstellbar und wieder lösbar ausgebildet. Eine derartige reversibel lösbare Klemmverbindung kann, bei geeigneter aufeinander abgestimmter Ausbildung von Aufnahme und Steckelement, nahezu beliebig oft gelöst und wiederhergestellt werden.

Bevorzugt ist die Klemmverbindung selbsthemmend ausgebildet. Durch die Selbsthemmung kann verhindert werden, dass sich die Klemmverbindung bei einer Positions- oder Ausrichtungsänderung des Vakuumgeräts, sowie bei Erschütterungen, Vibrationen oder ähnlichen Störeffekten, nicht in ihrer Verbindungswirkung vermindert oder selbständig löst.

Erfindungsgemäß ist das Steckelement aus faserverstärktem Kunststoff gebildet. Faserverstärkter Kunststoff, z.B. Kunststoff, welcher durch die Beigabe von Glaskurzfasern (PA6GF) verstärkt wurde, weist einerseits eine Härte und Festigkeit auf, die für die Ausbildung einer stabilen Klemmverbindung notwendig ist. Auf der anderen Seite verfügt glasfaserverstärkter Kunststoff über eine sich durch eine Mikrostruktur auszeichnende Oberflächenstruktur, welche durch Enden der dem Kunststoff beigemischten Glasfasern gebildet ist und die Selbsthemmung gegen ein Lösen der Klemmverbindung erhöht.

Erfindungsgemäß weist die Aufnahme einen kantigen, insbesondere scharfkantigen, Übergang in die Aufnahmeöffnung auf. Durch den kantigen Übergang wird bei einem Herstellen der Verbindung eine Verzahnung, insbesondere Mikroverzahnung, der Aufnahme und der Oberflächenstruktur des Steckelements bewirkt, welche die Selbsthemmung der Klemmverbindung weiter erhöht.

Vorteilhafterweise umfasst das Vakuumgerät zumindest drei am ersten Bauteil ausgebildete Steckelemente und wenigstens drei am zweiten Bauteil ausgebildete Aufnahmen, die jeweils einem der Steckelemente zugeordnet sind, wobei durch gleichzeitiges Einstecken der Steckelemente in die Aufnahmen die Klemmverbindung herstellbar ist. Dies verhindert ein Verdrehen oder ein Verkippen des ersten und des zweiten Bauteils relativ zueinander und erhöht die Stabilität der Klemmverbindung. Bevorzugt sind die Steckelemente und die Aufnahmen gleichmäßig verteilt.

Nachfolgend wird die Erfindung bespielhaft anhand einer vorteilhaften Ausführungsform unter Bezugnahme auf die beigefügte Zeichnung beschrieben. Es zeigen,
- Fig. 1: einen Ausschnitt einer perspektivischen Innenansicht einer Ausführungsform eines erfindungsgemäßen Vakuumgeräts, umfassend eine Verbindungseinrichtung zwischen einem Gehäuseteil und einem elektrischen Bauteil,
- Fig. 2: das Gehäuseteil der Ausführungsform von Fig. 1 ohne elektrisches Bauteil,
- Fig.3: eine Seitenansicht der Ausführungsform von Fig.1, wobei in Fig. 3(A) die Verbindungseinrichtung mit gelöster Klemmverbindung und in Fig. 3(B) die Verbindungseinrichtung mit hergestellter Klemmverbindung dargestellt ist, und
- Fig. 4: eine schematische Detailansicht einer möglichen Ausgestaltung einer erfindungsgemäßen Verbindungseinrichtung.

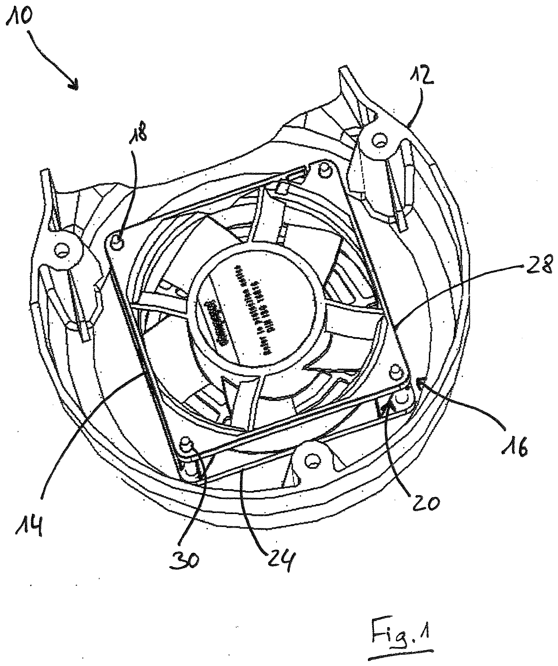

In Fig. 1 ist ein Ausschnitt einer perspektivischen Innenansicht einer Ausführungsform eines erfindungsgemäßen Vakuumgeräts 10 dargestellt. Der Ausschnitt zeigt ein Gehäuseteil 12 und ein elektrisches Bauteil 14, welches mittels einer erfindungsgemäßen Verbindungeinrichtung 16 mit dem Gehäuseteil 12 verbunden ist. Im gezeigten Beispiel handelt es sich bei dem Gehäuseteil 12 um eine abnehmbare Abdeckung des Vakuumgeräts 10 und bei dem elektrischen Bauteil14 um einen Lüfter. Bei dem Vakuumgerät 10 handelt es sich z.B. um eine Drehschieberpumpe.

Die Verbindungseinrichtung 16 umfasst vier Steckelemente 18 der Abdeckung 12 und vier Aufnahmen 20 des Lüfters 14. Der Lüfter 14 weist an einer Unterseite 22 eine ebene untere Auskragung 24 und an einer Oberseite 26 eine ebene obere Auskragung 28 auf. In der unteren Auskragung 24 und der oberen Auskragung 28 sind ringförmige Aufnahmeöffnungen 30 für die Steckelemente 18 ausgebildet. Die Aufnahmeöffnungen 30 in der unteren Auskragung 24 und der oberen Auskragung 28 sind paarweise ausgebildet, wobei jeweils zwei übereinanderliegende Aufnahmeöffnungen 30 eine Aufnahme 20 bilden.

Die Aufnahmeöffnungen 30 können bereits bei der Fertigung des Lüfters 14 in den, beispielsweise aus Kunststoff oder Metall bestehenden, Auskragungen 24, 28 gebildet werden. Möglich ist jedoch auch eine nachträgliche Ausbildung der Aufnahmeöffnungen 30, beispielsweise mittels senkrechter Bohrungen durch die untere und die obere Auskragung 24, 28.

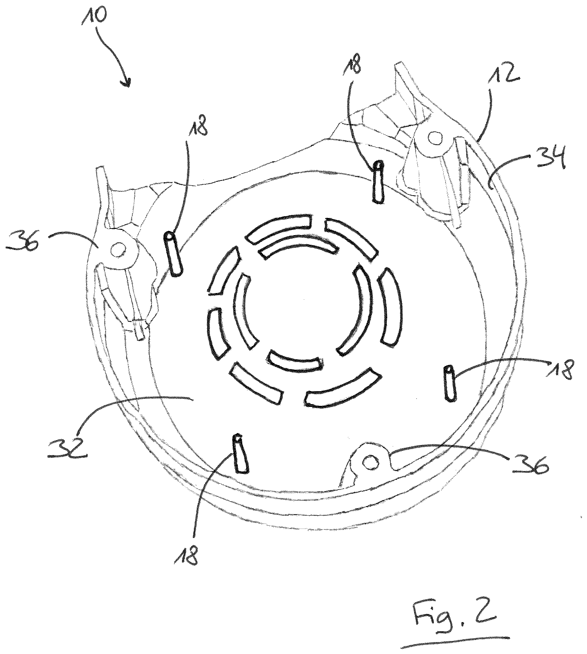

Fig. 2 zeigt eine Innenansicht der Abdeckung 12 aus Fig.1 zu einem Zeitpunkt, bevor der Lüfter 14 in das Vakuumgerät 10 eingesetzt und mit der Abdeckung 12 verbunden wird. Die Abdeckung 12 umfasst ein im Wesentlichen ebenes Bodenelement 32, das von einer Wandung 34 umschlossen und begrenzt wird. An einer Innenseite des Bodenelements 32 sind vier längliche Steckelemente 18 ausgebildet, die senkrecht aus dem Bodenelement 32 hervortreten. Die Steckelemente 18 weisen eine konische Form auf, wobei sich ein Querschnittsdurchmesser eines jeweiligen Steckelements 18 mit zunehmendem Abstand von dem Bodenelement 32 verkleinert. Dabei ist die Anordnung der Steckelemente 18 an die Anordnung der Aufnahmen 20 des Lüfters 14 angepasst, d.h. die Steckelemente 18 sind an Positionen ausgebildet, die Positionen der Aufnahmen 20 bei einer vorgegebenen Einbauausrichtung des Lüfters 14 entsprechen.

Die Abdeckung 12 und die Steckelemente 18 können einstückig z.B. aus Kunststoff ausgebildet und durch Spritzguss gefertigt sein. Dabei sind erfindungsgemäß zumindest die Steckelemente 18 aus faserverstärktem Kunststoff gebildet. Es versteht sich, dass alternativ die Abdeckung 12 und die Steckelemente 18 auch in gesonderten Schritten hergestellt und erst später zusammengefügt werden können. Genauso versteht es sich, dass die Abdeckung 12 und die Steckelemente 18 aus verschiedenen Materialien gefertigt sein können.

Im Übrigen weist die Abdeckung 12 drei Verbindungsabschnitte 36 auf, die als zylindrische Elemente mit äußeren Längsrippen und mit runden Aufnahmen für Befestigungselemente wie Schrauben ausgebildet sind. Über die Verbindungsabschnitte 36 kann die Abdeckung 12 z.B. mit einem Gehäuse des Vakuumgeräts 10 verschraubt werden.

Denkbar sind auch andere Ausbildungen der Verbindungsabschnitte 36, die beispielsweise nicht zylindrisch sind und/oder keine Längsrippen aufweisen. Weiterhin ist auch denkbar, dass die Aufnahmen der Verbindungsabschnitte 36 beliebige Querschnittsflächen aufweisen können und beispielsweise eckig ausgebildet sein können.

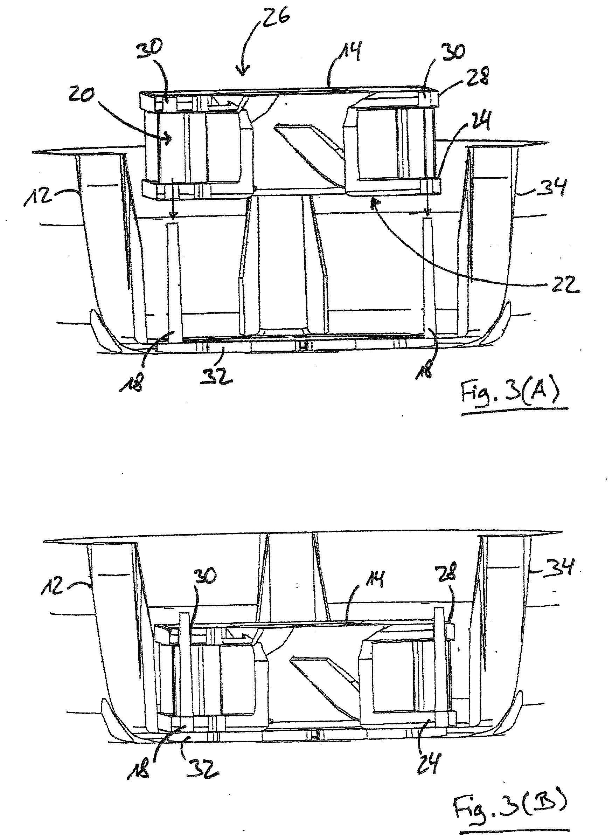

Fig. 3(A) und Fig. 3 (B) zeigen in Seitenansichten der Abdeckung 12 und des Lüfters 14, wie mittels der erfindungsgemäßen Verbindungseinrichtung 16 eine reversibel lösbare Klemmverbindung zwischen der Abdeckung 12 und dem Lüfter 14 gebildet wird. In Fig. 3(A) ist die Verbindungseinrichtung 16 mit gelöster Klemmverbindung dargestellt.

Zum Herstellen der Klemmverbindung wird nun der Lüfter 14 in Pfeilrichtung senkrecht nach unten geführt und mit einem leichten Kraftaufwand mit allen Aufnahmen 20 gleichzeitig auf die Steckelemente 18 gesteckt, wodurch sich eine stabile selbsthemmende Klemmverbindung zwischen den Steckelementen 18 und den Aufnahmeöffnungen 30 bzw. den Aufnahmen 20 ausbildet. Hierbei wird die Klemmverbindung durch eine Verbindung der Aufnahmeöffnungen 30 der unteren Auskragung 24 und nahe dem Bodenelement 32 angeordneten Bereichen der Steckelemente 18 bewirkt.

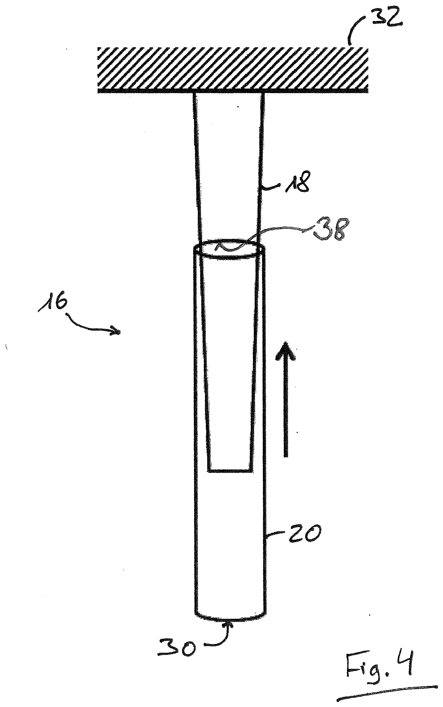

Dies wird unter anderem auch durch die Darstellung der Fig. 4 verdeutlicht, die schematisch das Konzept einer möglichen erfindungsgemäßen Verbindungseinrichtung 16 zeigt. Fig. 4 zeigt eine Detailansicht einer Aufnahmeöffnung 30 einer zylindrischen Aufnahme 20, die in Pfeilrichtung auf ein senkrecht aus einem Bodenelement 32 hervortretendes konisches Steckelement 18 gesteckt wird. Dabei wird die Klemmverbindung nur von demjenigen oberen Teil der Aufnahme 20 hergestellt, welcher mit dem Steckelement 18 in Kontakt steht. Dabei weist die Aufnahme 20 scharfkantigen Übergang 38 in die Aufnahmeöffnung 30 auf. Durch den scharfkantigen Übergang wird eine Verzahnung der Aufnahme 20 und der Oberflächenstruktur des Steckelements 18 bewirkt. Dieser Effekt und somit auch die Selbsthemmung der Klemmverbindung wird durch eine Ausbildung der Steckelemente 18 aus faserverstärktem Kunststoff und damit mit einem Material verstärkt, dessen Oberfläche z.B. eine Mikrostruktur aufweist, welche von den Enden von dem Kunststoff beigemischten Glasfasern gebildet ist.

Nachdem der Lüfter 14 in die Abdeckung 12 eingesetzt und mit dieser verbunden ist, kann die Abdeckung 12 samt Lüfter 14 z.B. auf ein nicht gezeigtes Gehäuse des Vakuumgeräts 10 aufgesetzt und mit diesem z.B. verschraubt werden. Gemäss einer nicht beanspruchten Ausführungsform ist jedoch auch denkbar, dass auch die Verbindungsabschnitte 36 als Aufnahmen ausgebildet sind, welche wiederum auf am Vakuumgerät 10 ausgebildete Steckelemente gesteckt werden, um eine reversibe lösbare Klemmverbindung zwischen Gehäuse und Abdeckung 12 des Vakuumgeräts 10 herzustellen.

### Bezugszeichenliste

- 10: Vakuumgerät
- 12: Abdeckung
- 14: Lüfter
- 16: Verbindungseinrichtung
- 18: Steckelement
- 20: Aufnahme
- 22: Unterseite des Lüfters
- 24: untere Auskragung
- 26: Oberseite des Lüfters
- 28: obere Auskragung
- 30: Aufnahmeöffnung
- 32: Bodenelement der Abdeckung
- 34: Wandung der Abdeckung
- 36: Verbindungsabschnitt der Abdeckung
- 38: Übergang

## Patentansprüche

1. Vakuumgerät (10), insbesondere Vakuumpumpe, mit einem ersten Bauteil (12), einem zweiten Bauteil (14) und einer Einrichtung (16) zum Verbinden des ersten und des zweiten Bauteils (12, 14), wobei eines der Bauteile (12, 14) ein elektrisches Bauteil, insbesondere ein Lüfter, ist, wobei das andere der Bauteile (12, 14) ein Gehäuseteil oder eine abnehmbare Abdeckung ist, wobei die Einrichtung (16) zumindest ein am ersten Bauteil (12) ausgebildetes Steckelement (18) und wenigstens eine am zweiten Bauteil (14) ausgebildete Aufnahme (20) mit einer Aufnahmeöffnung (30) für das Steckelement (18) umfasst, wobei
das Steckelement (18) und die Aufnahme (20) derart ausgebildet sind, dass durch Einstecken des Steckelements (18) in die Aufnahme (20) eine Klemmverbindung zwischen den beiden Bauteilen (12, 14) herstellbar ist, wobei das Steckelement (18) konisch ausgebildet ist und wobei die Aufnahmeöffnung (30) zylindrisch oder ringförmig oder konisch ausgebildet ist, oder wobei das Steckelement (18) zylindrisch ausgebildet ist und wobei die Aufnahmeöffnung (30) konisch ausgebildet ist, und
wobei die Aufnahme (20) einen kantigen, insbesondere scharfkantigen, Übergang (38) in die Aufnahmeöffnung (30) aufweist, der bei einem Herstellen der Klemmverbindung eine Verzahnung, insbesondere Mikroverzahnung, der Aufnahme (20) und einer Oberflächenstruktur des Steckelements (18) bewirkt, **dadurch gekennzeichnet, dass** das Steckelement (18) aus faserverstärktem Kunststoff gebildet ist.

2. Vakuumgerät (10) nach Anspruch 1, wobei das Steckelement (18) konisch und die Aufnahmeöffnung (30) zylindrisch oder ringförmig ausgebildet ist.

3. Vakuumgerät (10) nach Anspruch 1 oder 2, wobei das Steckelement (18) und/oder die Aufnahme (20) einstückig mit dem jeweiligen Bauteil (12, 14) ausgebildet sind.

4. Vakuumgerät (10) nach zumindest einem der vorstehenden Ansprüche, wobei das Steckelement (18) länglich ausgebildet ist, insbesondere wobei Länge und maximaler Durchmesser des Steckelements (18) ein Verhältnis von wenigstens 3 zu 1, bevorzugt wenigstens 4 zu 1 und besonders bevorzugt wenigstens 5 zu 1 aufweisen.

5. Vakuumgerät (10) nach zumindest einem der vorstehenden Ansprüche, wobei die Klemmverbindung zerstörungsfrei lösbar ausgebildet ist.

6. Vakuumgerät (10) nach zumindest einem der vorstehenden Ansprüche, wobei die Klemmverbindung werkzeuglos herstellbar und/oder werkzeuglos lösbar ausgebildet ist.

7. Vakuumgerät (10) nach zumindest einem der vorstehenden Ansprüche, wobei die Klemmverbindung wiederholt herstellbar und wieder lösbar ausgebildet ist.

8. Vakuumgerät (10) nach zumindest einem der vorstehenden Ansprüche, wobei die Klemmverbindung selbsthemmend ausgebildet ist.

9. Vakuumgerät (10) nach zumindest einem der vorstehenden Ansprüche, wobei die Einrichtung (16) zumindest drei am ersten Bauteil (12) ausgebildete Steckelemente (18) und wenigstens drei am zweiten Bauteil (14) ausgebildete Aufnahmen (20) umfasst, die jeweils einem der Steckelemente (18) zugeordnet sind, wobei durch gleichzeitiges Einstecken der Steckelemente (18) in die Aufnahmen (20) die Klemmverbindung herstellbar ist.

## Claims

1. A vacuum device (10), in particular a vacuum pump, comprising a first component (12), a second component (14), and a device (16) for connecting the first and the second component (12, 14), wherein one of the components (12, 14) is an electrical component, in particular a fan, wherein the other of the components (12, 14) is a housing part or a removable cover, wherein the device (16) comprises at least one plug-in element (18) formed at the first component (12) and at least one receiver (20) which is formed at the second component (14) and which has a reception opening (30) for the plug-in element (18), wherein
the plug-in element (18) and the receiver (20) are configured such that a clamping connection between the two components (12, 14) can be established by inserting the plug-in element (18) into the receiver (20), wherein the plug-in element (18) is conical, and wherein the reception opening (30) is cylindrical or annular or conical, or wherein the plug-in element (18) is cylindrical and wherein the reception opening (30) is conical, and
wherein the receiver (20) has an edged transition (38), in particular a sharpedged transition (38), into the reception opening (30) that, when the clamping connection is being established, brings about an interlocking, in particular a micro-interlocking, of the receiver (20) and the surface structure of the plug-in element (18),
**characterized in that**
the plug-in element (18) is formed from fiber-reinforced plastic.

2. A vacuum device (10) in accordance with claim 1, wherein the plug-in element (18) is conical and the reception opening (30) is cylindrical or annular.

3. A vacuum device (10) in accordance with claim 1 or claim 2, wherein the plug-in element (18) and/or the receiver (20) is/are formed in one piece with the respective component (12, 14).

4. A vacuum device (10) in accordance with at least one of the preceding claims, wherein the plug-in element (18) is elongate, in particular wherein the length and the maximum diameter of the plug-in element (18) have a ratio of at least 3 to 1, preferably at least 4 to 1, and particularly preferably at least 5 to 1.

5. A vacuum device (10) in accordance with any one of the preceding claims, wherein the clamping connection is non-destructively releasable.

6. A vacuum device (10) in accordance with at least one of the preceding claims, wherein the clamping connection is designed such that it can be established without tools and/or released without tools.

7. A vacuum device (10) in accordance with at least one of the preceding claims, wherein the clamping connection can be established repeatedly and can be released again.

8. A vacuum device (10) in accordance with at least one of the preceding claims, wherein the clamping connection is self-locking.

9. A vacuum device (10) in accordance with at least one of the preceding claims, wherein the device (16) comprises at least three plug-in elements (18) formed at the first component (12) and at least three receivers (20) which are formed at the second component (14) and which are each associated with one of the plug-in elements (18), wherein the clamping connection can be established by simultaneously inserting the plug-in elements (18) into the receivers (20).

## Revendications

1. Appareil à vide (10), en particulier pompe à vide, comportant un premier composant (12), un deuxième composant (14) et un dispositif (16) pour relier les premier et deuxième composants (12, 14), l'un des composants (12, 14) étant un composant électrique, tel qu'un ventilateur, l'autre des composants (12, 14) étant une partie de boîtier ou un couvercle amovible, le dispositif (16) comprenant au moins un élément enfichable (18) réalisé sur le premier composant (12) et au moins un logement (20) réalisé sur le deuxième composant (14) et présentant une ouverture de réception (30) pour l'élément enfichable (18),
dans lequel
l'élément enfichable (18) et le logement (20) sont réalisés de telle sorte que l'enfichage de l'élément enfichable (18) dans le logement (20) permet d'établir une liaison par serrage entre les deux composants (12, 14),
l'élément enfichable (18) est réalisé en forme conique, et l'ouverture de réception (30) est réalisée en forme cylindrique ou annulaire ou conique, ou l'élément enfichable (18) est réalisé en forme cylindrique et l'ouverture de réception (30) est réalisée en forme conique, et
le logement (20) présente une transition (38) à arête, en particulier à arête vive, vers l'ouverture de réception (30), transition qui, lors d'un établissement de la liaison par serrage, procure un engrènement, en particulier un micro-engrènement, du logement (20) et d'une structure de surface de l'élément enfichable (18),
**caractérisé en ce que**
l'élément enfichable (18) est réalisé en matière plastique renforcée par des fibres.

2. Appareil à vide (10) selon la revendication 1,
dans lequel l'élément enfichable (18) est réalisé en forme conique et l'ouverture de réception (30) est réalisée en forme cylindrique ou annulaire.

3. Appareil à vide (10) selon la revendication 1 ou 2,
dans lequel l'élément enfichable (18) et/ou le logement (20) sont réalisés d'une seule pièce avec le composant respectif (12, 14).

4. Appareil à vide (10) selon l'une au moins des revendications précédentes, dans lequel l'élément enfichable (18) est réalisé en forme allongée,
en particulier, la longueur et le diamètre maximal de l'élément enfichable (18) présentent un rapport d'au moins 3 sur 1, de préférence d'au moins 4 sur 1 et de manière particulièrement préférée d'au moins 5 sur 1.

5. Appareil à vide (10) selon l'une au moins des revendications précédentes, dans lequel la liaison par serrage est réalisée de manière à pouvoir être détachée sans être détruite.

6. Appareil à vide (10) selon l'une au moins des revendications précédentes, dans lequel la liaison par serrage est réalisée de manière à pouvoir être établie sans outil et/ou à pouvoir être détachée sans outil.

7. Appareil à vide (10) selon l'une au moins des revendications précédentes, dans lequel la liaison par serrage est réalisée de manière à pouvoir être établie et détachée à répétition.

8. Appareil à vide (10) selon l'une au moins des revendications précédentes, dans lequel la liaison par serrage est réalisée de manière autobloquante.

9. Appareil à vide (10) selon l'une au moins des revendications précédentes, dans lequel le dispositif (16) comprend au moins trois éléments enfichables (18) réalisés sur le premier composant (12) et au moins trois logements (20) réalisés sur le deuxième composant (14), qui sont associés chacun à l'un des éléments enfichables (18), la liaison par serrage pouvant être établie par enfichage simultané des éléments enfichables (18) dans les logements (20).
